# DEMANDE DE BREVET EUROPEEN

(11) **EP 1 591 425 A1**
(43) Date de publication de la demande: **02.11.2005**
(21) Numéro de dépôt: 04101735.1
(22) Date de dépôt: 26.04.2004
(51) Int. Cl.: C03B 23/03

(54) **Dispositif et procédé de bombage d'une feuille de verre**

(71) Demandeur: GLAVERBEL, 1170 Bruxelles (Watermael-Boitsfort) (BE)
(72) Inventeur: La désignation de l'inventeur n'a pas encore été déposée
(74) Mandataire: Farmer, Guy Dominic

(57) **Abrégé**

L'invention a trait à un dispositif de bombage d'une feuille de verre comprenant une station de pressage qui comprend une presse mâle et une presse femelle opposées et complémentaires. La presse mâle est formée d'au moins deux pièces distinctes résilientes, une base et au moins un complément de formage, adaptés à être fixés l'un à l'autre. Le complément de formage, qui est amovible et interchangeable selon la forme à donner à la feuille de verre, comprend une surface de fixation adaptée à être fixée à une surface de fixation de la base et une surface de formage adaptée à être pressé contre la feuille de verre et lui donner une forme désirée. L'invention concerne également une installation industrielle comprenant un tel dispositif ainsi qu'un procédé mettant en oeuvre ce dispositif.

## Description

La présente invention concerne un dispositif et procédé de bombage d'une feuille de verre.

Des feuilles de verre bombées peuvent avoir des applications variées. Elles peuvent être utilisées notamment comme vitrages dans des véhicules, par exemple automobiles, en tant que pare-brise, vitres latérales, lunette-arrière ou toit. Ces vitrages peuvent être trempés ou feuilletés. Pour de telles applications il est nécessaire que le dispositif de bombage permette de former les feuilles de verre de manière précise, sans causer de défauts optiques.

Il est connu notamment une technique selon laquelle une feuille de verre est transportée sur un convoyeur à rouleaux au travers d'un four tunnel dans lequel sa température est amenée jusqu'à sa température de ramollissement, puis est conduite jusqu'à une station de bombage, comportant une opération de pressage, et donc aussi parfois appelée station de pressage. Dans la station de bombage, la feuille de verre est soulevée du convoyeur par un cadre dont la forme correspond à celle que l'on souhaite conférer à la périphérie de la feuille de verre.

Le cadre peut être soit discontinu de façon à pouvoir traverser le lit de rouleaux sur lequel repose initialement la feuille de verre, soit de préférence, continu, et dans ce cas, le convoyeur à cet endroit peut être constitué de galets. Le cadre élève ensuite la feuille de verre pour venir l'appliquer contre la surface d'une forme (nommée aussi contre-moule ou presse mâle) supérieure. La forme est complémentaire du cadre et correspond donc à la forme désirée pour la feuille de verre.

D'autres variantes comportent le même type d'opération de pressage. Par exemple la feuille de verre peut être déposée sur un cadre avant d'entrer dans le four, et progresse dans ce dernier en étant supportée par le cadre. Le pressage sur la forme supérieure est opéré au moyen du même cadre ou d'un cadre qui se substitue à celui-ci dans l'élévation et le pressage de la feuille.

Dans certaines variantes, la feuille de verre peut être plaquée contre la forme supérieure par aspiration à travers cette forme. Ceci est réalisé par exemple à l'aide d'une multiplicité de conduits raccordés à des moyens assurant une certaine dépression à la surface de la forme. Ces conduits sont par exemple en communication avec une chambre centrale à pression réduite. Une telle disposition permet d'aspirer la feuille de verre et ainsi coopère avec le mouvement du cadre dans le formage de la feuille de verre.

Après pressage, le cadre redescend jusqu'à un niveau de convoyage. Suivant les techniques, soit le cadre s'escamote sous le lit de rouleaux et redépose ainsi la feuille de verre sur ledit lit de rouleaux, soit le cadre reprend son cheminement en portant la feuille.

Dans une variante le cadre inférieur redescend alors que la feuille de verre est toujours maintenue contre la presse supérieure par la force d'aspiration de celle-ci, un deuxième cadre "navette" se positionne sous la feuille de verre et l'aspiration est stoppée de façon à ce que la feuille de verre se place sur la navette. Ce cadre navette correspond en sa périphérie au profil de la feuille bombée finale.

Dans tous les cas, la feuille de verre bombée est conduite jusqu'à la station de refroidissement ou de trempe.

Le type de technique de bombage décrit ci-dessus se caractérise par le fait que l'opération de pressage s'opère en dehors du four ou tout au moins en dehors d'une zone contrôlée en température. Ce type de technique doit ainsi être considérée comme une technologie à froid, ce qualificatif définissant le lieu de la station de pressage en dehors d'une enceinte maintenue en température. Il est également connu de placer un système chauffant dans la presse supérieure de manière à compenser la perte de température due au fait que le bombage se passe en dehors du four. Ce système chauffant peut être, par exemple, des résistances chauffantes.

Dans une autre technique de bombage, l'opération de pressage s'opère dans le four. Les presses peuvent être dans ce cas chauffées par le four.

Pour chaque modèle de verre bombé, il convient de fabriquer les deux éléments de pressage complémentaires, la forme supérieure pleine, appelée aussi presse mâle, et le cadre inférieur, appelé aussi anneau ou presse femelle.

La presse mâle est constituée d'un bloc dont la forme doit être d'une grande précision. Par ailleurs dans la pratique actuelle, cette presse comprend tous les éléments fonctionnels tels que les moyens assurant l'aspiration de la feuille ou les éléments de chauffage de la presse lorsqu'il est nécessaire de réchauffer la presse pour éviter à la feuille de verre un choc thermique. En pratique donc l'usinage de cette pièce est relativement contraignant, long et coûteux.

Lorsque le modèle de verre bombé en fabrication sur la ligne de bombage doit être changé pour un autre modèle, il convient de changer à la fois la presse mâle et la presse femelle. La production est arrêtée le temps de positionner correctement les éléments de pressage en vis-à-vis et le temps d'atteindre la bonne température des presses. Or ce temps peut être relativement long, surtout pour la presse mâle qui est caractérisée par une certaine inertie thermique due principalement à sa masse.

Selon un de ses aspects, la présente invention consiste en un dispositif de bombage d'une feuille de verre tel que revendiqué dans la revendication 1. Les autres revendications définissent des aspects de l'invention alternatifs et/ou préférés.

L'invention peut permettre de limiter le coût et le temps liés à la fabrication de l'élément de pressage mâle et peut aussi permettre de rendre plus aisé et plus rapide le changement de cet élément, lorsque le modèle de verre bombé en fabrication sur la ligne change. Elle peut aussi présenter l'avantage que la plus grande partie de la presse mâle reste en place et à bonne température et que seule une partie de la presse mâle doit être manipulée et atteindre la température adéquate. Ce sont des avantages certains, car de plus en plus de vitrages automobiles sont bombés et de plus en plus de modèles différents de vitrages bombés existent.

Selon une forme de l'invention, un des éléments de pressage composant la station de bombage/pressage, de préférence la presse mâle, est formé d'au moins deux pièces distinctes résilientes, adaptées à être fixées l'une à l'autre. Ces deux pièces sont appelées base et complément de formage ou complément. La base et le complément peuvent être faits soit tous les deux en fonte ou en acier réfractaire, c'est-à-dire un acier résistant aux hautes températures, soit l'un en acier et l'autre en fonte. De préférence, ils sont tous les deux fabriqués dans la même matière. Ils constituent des pièces rigides. Le complément, qui est amovible et interchangeable selon la forme à donner à la feuille de verre, comprend une surface de fixation adaptée à être fixée à une surface de fixation de la base et une surface de formage adaptée à être pressé contre la feuille de verre et lui donner une forme désirée. La forme donnée à la feuille de verre à ce stade du processus de bombage n'est pas nécessairement la forme définitive finale de la feuille de verre. Il se peut que la feuille de verre se relâche un peu après le pressage. Le complément est une pièce résiliente, capable d'être fixée à la base, par des vis par exemple.

De préférence le complément est fixé à la base de manière la plus jointive possible de façon à ce que la chaleur de la base puisse se communiquer au complément par simple conduction. Dans certains modes de réalisation de l'invention, les surfaces de fixation de la base et du complément, peuvent être des surfaces non-planes et/ou discontinues. En effet, des discontinuités de type orifices ou rainures par exemple, peuvent être présentes aux surfaces de fixation de la base et/ou du complément. La surface de formage du complément, c'est-à-dire la surface qui donne à la feuille de verre une forme particulière, est non-plane et peut être discontinue elle aussi.

Dans certaines formes de l'invention, un tissu métallique souple peut recouvrir la surface de formage de la presse mâle. Cela peut permettre d'éviter ou de réduire les marques dans le verre lors du pressage.

De préférence, la presse mâle comprend des moyens permettant d'engendrer une pression réduite sur la surface de formage du complément. Ces moyens peuvent permettre d'attirer la feuille de verre sur la presse mâle ou du moins d'aider au mouvement de la feuille de verre vers la presse mâle. Ils peuvent également permettre à la feuille de verre de rester contre la presse mâle pendant que la presse femelle s'écarte et fait place, par exemple, à un cadre navette. La pression réduite peut alors être coupée et la feuille de verre se déposer dans la navette. Dans un mode particulier de l'invention, la base comprend en son centre une chambre reliée à des moyens d'aspiration. Il peut s'agir d'un système de pompe à vide de manière à créer une pression réduite dans la chambre, c'est-à-dire une pression inférieure à la pression atmosphérique. En communication avec la chambre, il peut y avoir des conduits pouvant fonctionner également à pression réduite et qui débouchent sur la surface de formage. Des orifices peuvent alors être visibles sur la surface de formage. Lorsque la presse mâle est formée d'une base et d'un complément de formage, il est important que ces moyens permettant d'engendrer une pression réduite soient continus à travers ces deux pièces. De préférence, les orifices des conduits présents à la surface de fixation du complément coïncident avec des orifices présents sur la surface de fixation de la base.

Dans certaines formes de l'invention, le complément ne couvre pas entièrement la base, c'est-à-dire que la surface de fixation du complément est plus petite que la surface de fixation de la base. Dans ce cas, il est possible de fixer des éléments à la base de façon à boucher les orifices de la base non couverts par le complément. De préférence, ces éléments sont des plaques ou tôles en inox résistant à de hautes températures. Alternativement, le complément lui-même peut comprendre des portions ne constituant pas une surface de formage, mais permettant de boucher les orifices d'aspiration.

De préférence, pour assurer une bonne étanchéité entre la base et le complément, il est possible de créer une ou plusieurs rainures à la surface de fixation soit de la base soit du complément soit des deux, et de les remplir avec un joint résistant aux hautes températures, qui, en s'écrasant lors du serrage des vis de fixation, assurera l'étanchéité.

L'invention peut être utilisée soit dans le cas où la station de pressage se trouve dans le four ou dans une enceinte maintenue en température, soit dans le cas où la station de pressage se trouve hors du four ou hors d'une zone contrôlée en température. Dans ce dernier cas, la base de la presse mâle comprend de préférence des moyens chauffants. Ceux-ci peuvent être formé par exemple de résistances électriques chauffantes inclues dans la masse pleine de la base.

Dans certaines formes de l'invention, la presse mâle peut comprendre plus d'un complément de formage, identiques entre eux, ou différents. La presse mâle peut par exemple être formée d'une base et de deux compléments de formage. Les compléments sont tous les deux adaptés à être fixés à la base, sont amovibles et interchangeables selon les formes à donner aux feuilles de verre, comprennent chacun une surface de fixation adaptée à être fixée à la surface de fixation de la base et chacun, une surface de formage adaptée à être pressée contre les feuilles de verre et leur donner une forme désirée. La presse femelle peut alors elle aussi comprendre plus d'un cadre, par exemple, deux cadres, chacun complémentaire à un des deux compléments de formage de la presse mâle. Ceci peut avantageusement accroître la production de la ligne en permettant de presser deux feuilles de verre, voire plus, en une seule opération.

L'invention concerne également une installation industrielle de bombage de feuilles de verre comprenant un four tunnel, une station de pressage pouvant être située dans le four ou en dehors de celui-ci, diverses paires de presses mâle et femelle complémentaires selon les divers modèles de courbure de feuilles de verre, et une station de refroidissement ou de trempe, caractérisé en ce qu'au moins une des presses mâles pouvant être utilisée dans la station de pressage est formée d'au moins deux pièces distinctes résilientes, une base et au moins un complément de formage, adaptés à être fixés l'un à l'autre, et caractérisé en ce que le complément, qui est amovible et interchangeable selon la forme à donner aux feuilles de verre, comprend une surface de fixation adaptée à être fixée à une surface de fixation de la base et une surface de formage adaptée à être pressé contre les feuilles de verre et leur donner une forme désirée. L'installation comprend ainsi toutes les presses mâles et femelles pouvant être stockées dans les environs de la station de pressage et pouvant être utilisées alternativement dans la station de pressage proprement dite, à la manière de pièces de rechange. L'installation peut aussi bien utiliser des presses mâles traditionnelles, en une seule pièce, que des presses mâles selon l'invention, formée d'au moins deux pièces résilientes.

L'invention concerne aussi un procédé de bombage d'une feuille de verre comprenant une étape de pressage entre deux presses opposées et complémentaires selon l'invention. L'étape de pressage peut être réalisée soit à l'intérieur de four, soit en dehors de celui-ci ou d'une enceinte maintenue en température. Un des avantages à ce que l'étape de pressage se fasse en dehors du four est la meilleure accessibilité à l'outillage et donc une plus grande facilité pour le changer et le régler. Lorsque le modèle de verre bombé en fabrication sur la ligne change pour un autre modèle, pour changer la presse mâle, il suffit de détacher le complément de formage de la base qui, elle, reste en place, et d'y fixer un autre complément correspondant au nouveau modèle de verre souhaité.

De manière avantageuse, lorsque le pressage s'effectue en dehors du four, la presse mâle comprend des moyens chauffants. Il n'est pas nécessaire que le complément de pressage selon l'invention comprenne lui aussi de tels moyens chauffants. Ceci peut faciliter sa fabrication et en réduire le coût. Le complément peut être chauffé par conduction au contact de la base qui comprend les moyens chauffants. Le complément peut être dessiné pour être le moins volumineux possible et donc être chauffé plus rapidement. Il est de préférence fabriqué en fonte ou en acier haute température, qui permet la conduction de chaleur depuis la base vers le complément. Il est également possible de préchauffer le complément de formage avant de le placer sur la base dans la station de pressage.

Divers aspects de l'invention vont à présent être décrits, par le biais d'exemples uniquement, tout en faisant référence aux figures. Ces exemples n'ont aucun caractère limitatif. Les figures ne sont pas dessinées à l'échelle.
Fig. 1: Vue en perspective d'une presse mâle selon l'invention comprenant des moyens chauffants
Fig. 2: Vue en perspective et éclatée d'une presse mâle selon l'invention comprenant des moyens chauffants
Fig. 3: Vue en perspective d'une presse mâle selon l'invention ne comprenant pas de moyens chauffants
Fig. 4: Vue schématique en coupe d'une presse mâle selon l'invention comprenant un système d'aspiration et des moyens chauffants
Fig. 5: Vue schématique du dessous d'une presse mâle selon l'invention comprenant un système d'aspiration et deux compléments de formage

### Exemple 1

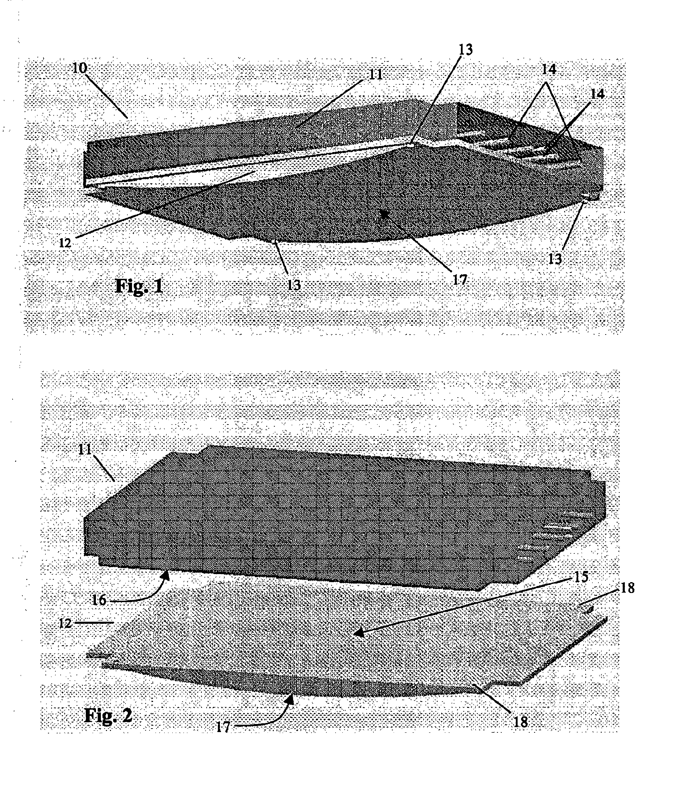

Un vitrage bombé est fabriqué sur une ligne de production selon les étapes suivantes. Une feuille de verre est transportée sur un convoyeur à rouleaux et passe dans un four tunnel où elle est amenée jusqu'à sa température de ramollissement, par exemple environ 650-660°C. A la sortie du four tunnel, se trouve une station de pressage. La feuille de verre est conduite, toujours sur les rouleaux, dans la station de pressage où elle est soulevée du convoyeur par un cadre dont la forme correspond à celle que l'on souhaite donner à la périphérie de la feuille de verre. Le cadre est continu et traverse le lit de galets sur lequel repose initialement la feuille de verre. Ce cadre, aussi appelé presse femelle, est adapté à être pressé contre la périphérie de la feuille de verre et lui donner une forme désirée. Le cadre soulève donc la feuille de verre pour venir la presser contre une presse mâle supérieure dont la forme est complémentaire du cadre et correspond donc à la forme désirée pour la feuille de verre. Après pressage, le cadre inférieur redescend jusqu'à un niveau inférieur au lit de galets et redépose ainsi la feuille de verre, bombée, sur le lit de galets. Ceux-ci se remettent ensuite en mouvement et conduisent la feuille de verre jusqu'à une station de refroidissement. A la fin de la ligne, après refroidissement, la feuille de verre possède la courbure finale désirée, qui n'est généralement pas équivalente à la courbure donnée par l'étape de pressage. La forme de la courbure donnée par le pressage entre les presses mâles et femelles est en fait une courbure intermédiaire qui doit être calculée avec précision, pour qu'après que le verre se soit légèrement relâché et soit refroidi, elle donne la courbure finale souhaitée. La presse mâle 10 est représentée dans la figure 1. Elle se compose de deux pièces distinctes résilientes en fonte: une base 11 et un complément de formage 12. Le complément de formage, ou complément, est fixé à la base par des vis 13. La base comprend des moyens chauffants faits de résistances électriques 14 qui la traversent et qui permettent de conférer à la base une température d'environ 300-400°C. Cette température est réglable au moyen de thermocouples 14' situés dans la base. Le complément s'adapte à la base et lui est jointif, de manière à ce que la base puisse chauffer le complément par conduction thermique et qu'ainsi la température du complément soit semblable à celle de la base. Il est nécessaire que la presse soit à une température suffisante pour éviter que des points froids n'apparaissent dans le verre, qui pourraient constituer des points fragiles. Comme on le voit à la figure 2, le complément de formage 12 peut être détaché de la base 11 pour être interverti avec un autre complément lorsque l'on change de modèle de courbure en fabrication sur la ligne de production. Le complément de formage 12 comprend une surface de fixation 15 adaptée à être fixée à la surface de fixation de la base 16, et une surface de formage 17 adaptée à être pressée contre la feuille de verre pour lui donner une forme désirée. On peut voir les emplacements 18 prévus pour les vis de fixation dans le complément.

### Exemple 2

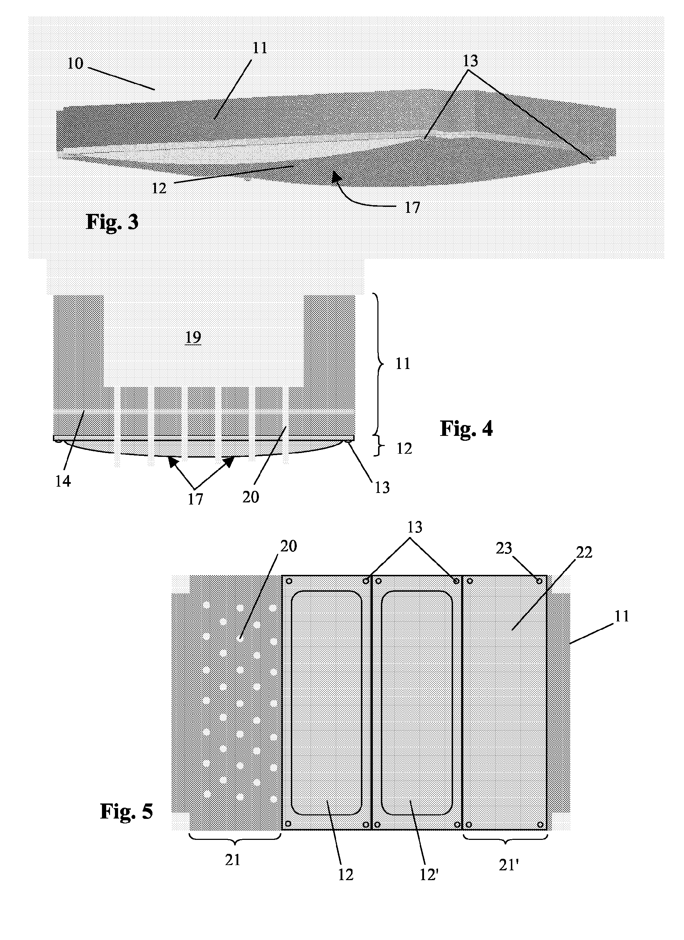

Un vitrage bombé est fabriqué sur une ligne de production telle que décrite dans l'exemple 1, sauf que la station de pressage se situe dans le four tunnel, c'est-à-dire dans un environnement à une température d'environ 700°C. Dans ce cas, la presse mâle ne possède pas de moyens chauffants internes. C'est cette presse mâle qui est représentée à la figure 3.

### Exemple 3

Un vitrage bombé est fabriqué sur une ligne de production telle que décrite dans l'exemple 1, sauf que le mouvement du verre lors de l'étape de pressage est assuré d'une manière légèrement différente. Dans cet exemple, représenté à la figure 4, la presse mâle 10 comprend des moyens permettant d'engendrer une pression réduite sur la surface de formage 17 du complément. Ces moyens sont composés d'une chambre 19 reliée à un système (non représenté) pour créer le vide ou du moins une pression inférieure à la pression atmosphérique, et de conduits 20 qui traversent la presse mâle jusqu'à la surface de formage 17. Ce système permet d'attirer et/ou maintenir la feuille de verre contre la surface de formage, par aspiration. Lorsque la feuille de verre arrive dans la station de pressage, le système de pression réduite est activé et la feuille de verre est aspirée par la presse mâle en même temps que le cadre presse femelle soulève la feuille de verre. Après pressage, le cadre redescend alors que la feuille de verre est toujours maintenue contre la presse supérieure par la force d'aspiration de celle-ci. Un cadre navette se positionne sous la feuille de verre et l'aspiration est stoppée de façon à ce que la feuille de verre se place sur la navette. C'est le cadre navette qui conduit le verre bombé jusqu'à la station de refroidissement.

### Exemple 4

Des vitrages bombés sont fabriqués sur une ligne de production telle que décrite dans l'exemple 3, sauf que deux vitrages sont fabriqués simultanément, grâce à deux compléments de formage fixés à la base. La figure 5 représente une vue du dessous de la presse mâle. Deux compléments de formage 12 et 12' sont fixés à la base 11 par des vis 13. La base a une dimension de 125 x 86 cm. Dans les zones 21 et 21' de la surface de fixation de la base où il n'y a pas de complément de formage, on peut voir les orifices où débouchent les conduits 20 du système d'aspiration. En fonctionnement, ces orifices sont bouchés par le placement sur la surface de fixation de la base, d'une plaque 22 en inox résistant aux hautes températures, fixée aux moyens de vis 23. Dans cet exemple, deux feuilles de verre sont convoyées parallèlement sur le lit de rouleaux et sont soulevées et pressées contre la presse mâle par deux cadres femelles

## Revendications

1. Dispositif de bombage d'une feuille de verre comprenant une station de pressage qui comprend une presse mâle et une presse femelle opposées et complémentaires, **caractérisé en ce que** la presse mâle est formée d'au moins deux pièces distinctes résilientes, une base et au moins un complément de formage, adaptés à être fixés l'un à l'autre, et **caractérisé en ce que** le complément, qui est amovible et interchangeable selon la forme à donner à la feuille de verre, comprend une surface de fixation adaptée à être fixée à une surface de fixation de la base et une surface de formage adaptée à être pressé contre la feuille de verre et lui donner une forme désirée.

2. Dispositif de bombage selon la revendication 1, **caractérisé en ce que** la presse mâle comprend des moyens permettant d'engendrer une pression réduite sur la surface de formage du complément, de façon à attirer et/ou maintenir la feuille de verre contre la surface de formage, moyens qui sont compris à la fois dans la base et le complément.

3. Dispositif de bombage selon la revendication 2, **caractérisé en ce que** la base comprend une chambre et des conduits en communication avec cette chambre, le tout raccordé à des moyens d'aspiration.

4. Dispositif de bombage selon la revendication 3, **caractérisé en ce que** le complément comprend des conduits en communication avec ceux de la base au niveau de la surface de fixation et débouchant sur la surface de formage.

5. Dispositif de bombage selon une des revendications précédentes, **caractérisé en ce que** la base comprend des moyens chauffants.

6. Dispositif de bombage selon une des revendications précédentes, **caractérisé en ce que** la presse femelle est un cadre adapté à être pressé contre une partie périphérique de la feuille de verre et lui donner une forme désirée.

7. Dispositif de bombage selon une des revendications précédentes, **caractérisé en ce que** la presse mâle comprend plusieurs compléments identiques ou différents.

8. Dispositif de bombage selon la revendication 7, **caractérisé en ce que** la presse femelle comprend plusieurs cadres, chacun complémentaire à un des compléments de la presse mâle.

9. Installation de bombage de feuilles de verre comprenant un four tunnel, une station de pressage, diverses paires de presses mâle et femelle complémentaires, et une station de refroidissement ou de trempe, **caractérisé en ce qu'**au moins une des presses mâles pouvant être utilisée dans la station de pressage est formée d'au moins deux pièces distinctes résilientes, une base et au moins un complément de formage, adaptés à être fixés l'un à l'autre, et **caractérisé en ce que** le complément, qui est amovible et interchangeable selon la forme à donner aux feuilles de verre, comprend une surface de fixation adaptée à être fixée à une surface de fixation de la base et une surface de formage adaptée à être pressé contre les feuilles de verre et leur donner une forme désirée.

10. Procédé de bombage d'une feuille de verre comprenant une étape de pressage entre deux presses opposées et complémentaires selon l'une des revendications précédentes.

11. Procédé de bombage selon la revendication 10, **caractérisé en ce que** l'étape de pressage se fait en dehors du four.

12. Procédé de bombage selon la revendication 10 ou 11, **caractérisé en ce que** le complément est chauffé par conduction au contact de la base qui comprend des moyens chauffants.

13. Vitre latérale, toit en verre ou lunette-arrière d'automobile, **caractérisé en ce qu'**il est fabriqué au moyen d'un dispositif selon une des revendications 1 à 8
